Europäisches Patentamt

European Patent Office

Office européen des brevets

(11) Publication number: **0 322 044**
**A2**

## EUROPEAN PATENT APPLICATION

(21) Application number: 88202903.6

(22) Date of filing: 15.12.88

(51) Int. Cl.⁴: **C08L 67/06 , C08L 63/10 ,**
**//(C08L67/06,53:00),**
**(C08L63/10,53:00)**

(30) Priority: 21.12.87 US 135910

(43) Date of publication of application:
28.06.89 Bulletin 89/26

(84) Designated Contracting States:
BE DE ES FR GB IT NL SE

(71) Applicant: SHELL INTERNATIONALE
RESEARCH MAATSCHAPPIJ B.V.
Carel van Bylandtlaan 30
NL-2596 HR Den Haag(NL)

(72) Inventor: Willis, Carl Lesley
15922 Red Willow
Houston Texas 77084(US)
Inventor: Karim, Karl Andrew
15818 Tammany Lane
Houston Texas 77082(US)

(74) Representative: Aalbers, Onno et al
P.O. Box 302
NL-2501 CH The Hague(NL)

(54) Polymeric composition.

(57) A polyester resin composition useful in preparing shaped, cured products having good impact strength and surface characteristics. The improved impact strength and surface characteristics result from the incorporation of a conjugated diolefin polymer wherein from 70 to 100 mole percent of the conjugated diolefin monomer incorporated therein is incorporated via 1,2-addition. The conjugated diolefin polymer may be a copolymer and is, preferably, a block copolymer containing at least one polymeric block containing predominantly monoalkenyl aromatic hydrocarbon monomer units and at least one polymeric block containing predominantly conjugated diolefin monomer units. Copolymers useful as modifiers in the polyester resin composition will contain at least about 35 weight percent conjugated diolefin monomer so as to ensure that the copolymer is an elastomer. The polyester resin composition may comprise thermosetting, unsaturated polyesters or thermoplastic saturated polyesters.

EP 0 322 044 A2

## POLYMERIC COMPOSITION

This invention relates to a polymeric composition. More particularly, this invention relates to a polyester resin composition.

The use of polyesters in various applications is, of course, well known in the prior art. Generally, and particularly when the polyester is an unsaturated, thermosetting polyester the polyester is used in combination with a vinyl monomer and a curing agent. Depending upon the particular end use in which the polyester is used, the composition may also comprise other additives such as fillers, aggregate, reinforcing agents, antishrinking agents, thickeners and the like.

In general, end-use products prepared with polyester resins exhibit excellent rigidity, heat resistance and electrical characteristics. Products prepared from thermosetting polyesters do not, however, exhibit good impact resistance. Moreover, moulded articles prepared with thermosetting polyester resin compositions frequently exhibit poor surface characteristics. The surface defects are, of course, caused primarily by shrinkage of the polyester or polyester composition as it cures. As a result, polymeric compositions comprising a thermosetting polyester as the sole polymeric component cannot effectively be used in bulk moulding and sheet moulding applications. Moreover, the poor impact strength and shrinkage has, to some extent at least, restricted the use of such polymeric compositions in other end-use applications such as coatings, polymeric concrete compositions, and the like.

Heretofore, several techniques have been proposed for improving the impact resistance of shaped products fashioned from a polyester and to reduce the shrinkage thereof. Many such techniques are summarized in the background section of U.S. Patent 4,329,438. These methods include addition of either a diolefin rubber or a styrene-diolefin block copolymer to the resin composition. These methods also include the addition of a carboxylated derivative of a styrene-butadiene block copolymer. As indicated in the background section of said U.S. Patent 4,329,438, however, these methods have not been completely successful due, primarily, to the incompatibility of the rubber polymer, especially when the rubber is used at relatively low concentrations, in the composition and the resulting destructive phase separation and bleeding of the rubber to the surface. Another difficulty with the proposed prior art solutions to the problem, particularly in those cases where a block copolymer is used, is solubility of the block copolymer in the vinyl monomer which functions both as a crosslinking agent and a solvent in thermosetting compositions. U.S. Patent 4,329,438 discloses yet another method of solving the destructive phase separation problem wherein a carboxylated derivative of a styrene-butadiene block copolymer is used. More recently, it has been proposed to solve the problem, in effect, by grafting or otherwise reacting the elastomeric polymer with the polyester such as mentioned in U.S. Patent No. 4,628,072.

While certain of the techniques heretofore proposed for improving the impact resistance of products prepared from a polyester and for reducing the shrinkage of compositions containing a thermosetting polyester have, to some extent, at least, been reasonably successful all that have been successful at best complicate the process for preparing the polyester resin composition or the polymeric components therein by increasing the number of process steps required. Therefore, there is a need for a method by which the impact strength of a polyester resin product may be improved and the shrinkage associated with thermosetting polyester resin composition reduced, which method can be accomplished in a reduced number of steps.

It has now been discovered that the foregoing and other disadvantages of the prior art polyester resin compositions can be overcome or at least significantly reduced with the polyester composition of this invention. It is, therefore, an object of the present invention to provide an improved polyester resin composition. It is another object of this invention to provide such a polyester resin composition which may be stored and used with reduced threat of destructive phase separation. It is still another object of the present invention to provide such a modified polyester resin composition, which, when cured, will yield moulded products having good impact resistance. The foregoing and other objects and advantages will become apparent from the description set forth hereinafter.

In accordance with the present invention, the foregoing and other objects and advantages are accomplished by incorporating a conjugated diolefin polymer having a relatively high vinyl content into the polyester resin composition as a modifier. More particularly according to the present invention a polyester resin composition comprising at least a polyester and a conjugated diolefin polymer wherein from 70 to 100 mole per cent of the conjugated diolefin monomers are incorporated into the polymer via 1,2 addition, the conjugated diolefin polymer being substantially free of carboxyl groups. The conjugated diolefin polymer may be a homopolymer or a copolymer being substantially free of carboxyl groups. When the conjugated diolefin polymer is a copolymer of one or more conjugated diolefins and one or more other monomers it is important that the copolymer contain at least about 35 wt% conjugated diolefin monomer units, in order to ensure the elastic characteristic needed to impart improved impact resistance or strength, and that the conjugated diolefin portion of the polymer be high in 1,2-vinyl content. When the conjugated diolefin polymer is a copolymer, this copolymer may be random, tapered or block.

The use of the high 1,2-addition content conjugation diolefin polymer is particularly advantageous when the polymer is used at lower concentrations. In this regard, it should be noted that destructive phase separation is most prevalent in those compositions where the conjugated diolefin is not the continuous phase, generally, when the conjugated diolefin is present at amounts less than about 20 wt%. It will be appreciated that the polyester resin compositions of the present invention may also include a suitable solvent.

In general, any of the polyesters known in the prior art may be used in the polyester resin composition of the present invention and the impact resistance of moulded articles prepared therewith improved through the incorporation of a conjugated diolefin polymer having relatively high 1,2 monomer addition content in the conjugated diolefin portion of said polymer. Suitable polyesters, then, include the thermosetting unsaturated polyesters and the thermalplastic saturated polyesters. Moreover, the surface characteristics of moulded articles prepared with thermoplastic polyester resin compositions are improved when the composition comprises such a high 1,2-content polymer. Suitable thermosetting polyesters include those prepared by condensing an unsaturated polycarboxylic acid or anhydride with a polyhydric alcohol such as mentioned in U.S. Patent Nos. 3,925,299; 3,925,300 and 3,489,707 and the polyvinyl esters such as mentioned in U.S. Patent Nos. 3,179,623; 3,256,266; 3,301,743; 3,317,465; 3,367,992 and 3,377,406. Suitable thermoplastic polyesters include those prepared by condensing a saturated polycarboxylic acid with a polyhydric alcohol such as mentioned in U.S. Patent Nos. 4,101,605 and 4,657,970. As is well known in the prior art, a portion of the unsaturated polycarboxylic acid used in a thermal setting polyester may be replaced by a saturated polycarboxylic acid.

In general, unsaturated polyesters prepared from an unsaturated polycarboxylic acid and/or an anhydride thereof and a polyhydric alcohol include unsaturated polyesters obtained by replacing up to 90 mol% of the unsaturated polycarboxylic acid or anhydride thereof with a saturated polycarboxylic acid or an anhydride thereof. Suitable unsaturated polycarboxylic acids or anhydrides, particularly dicarboxylic acids or anhydrides include, but are not limited to, maleic, fumaric, itaconic, citraconic, chloromaleic, mesaconic, glutaconic, and the like. Suitable saturated dicarboxylic acids or anhydrides which may be substituted for a part of the unsaturated dicarboxylic acid or anhydride include, but are not limited to, phthalic, succinic, adipic, azelaic, isophthalic, chlorendric, tetrafluorophthalic and the like. Suitable polyhydric alcohols, particularly dihydric alcohols include, but are not limited to, linear glycols such as ethylene glycol, propylene glycol, dipropylene glycol, diethylene glycol, 1,3-butane-diol, neopentyl glycol and the like. Mixtures of these glycols may, of course, also be used. Moreover, mixtures of these glycols with hydroxyalkyl ethers of bisphenol-A and the like may also be used.

Suitable unsaturated polyesters may be prepared by any of the methods disclosed in the above-mentioned U.S. Patent Nos. 3,925,299; 3,925,300 and 3,489,707. In general, these polyesters are produced by condensing the polycarboxylic acid or anhydride or mixtures thereof with a polyhydric alcohol or mixtures thereof at a temperature within the range from $30°C$ to $205°C$. The condensation reaction is usually terminated when an acid number less than 100 is reached. Generally, the acid number is tracked by use of an indicator such as toluhydroquinone, hydroquinone, a methyl ester of hydroquinone, m-dinitrobenzene and the like.

Suitable polyvinyl esters which are useful in the composition of this invention are generally prepared by reacting an unsaturated monocarboxylic acid with a polyepoxide. Suitable unsaturated monocarboxylic acids which are useful in the preparation of polyvinyl esters include acrylic acid, methacrylic acid, halogenated acrylic or methacrylic acids, cinnamic acid, various half esters of dicarboxylic acids such as the half esters of hydroxy alkyl acrylate or methacrylate wherein the hydroxy alkyl group preferably has from 2 to 6 carbon atoms and the like. Suitable polyepoxides which may be used in the preparation of polyvinyl esters include, but are not limited to, glycidyl polyethers of both polyhydric alcohols and polyhydric phenols, flame retardant epoxy resins based on tetra-bromo bisphenol-A, epoxy novolacs, epoxidized fatty acids or drying oil acids, epoxidized diolefins, epoxidized diunsaturated acid esters, epoxidized unsaturated polyesters containing more than one oxirane group per molecule and the like. The polyepoxides may be monomeric or polymeric. Polyvinyl esters useful in the composition of this invention may be prepared by any one of the processes disclosed in the aforementioned U.S. Patent Nos. 3,179,623; 3,256,266; 3,301,743; 3,317,465; 3,367,992 and 3,377,406. Again, up to 90 mol% of the unsaturated monocarboxylic acid used to prepare a polyvinyl ester may be substituted with a saturated monocarboxylic acid.

Thermoplastic polyesters suitable for use in the composition of the present invention, particularly in combination with a thermosetting polyester, are generally prepared by condensing a suitable saturated polycarboxylic acid, particularly a dicarboxylic acid, and a polyhydric alcohol, particularly a dihydric alcohol or by the ring opening polymerization of a cyclic lactone. Suitable saturated polycarboxylic acids, particularly dicarboxylic acids, which may be used to prepare thermoplastic polyesters include, but are not limited to aromatic and aliphatic dicarboxylic acids such as oxalic acids, malonic acid, succinic acid, glutaric acid, pimelic acid, suberic acid, adipic acid, sebacic acid, azelaic acid, phthalic acid, terephthalic acid, isophthalic acid, and the like. Two or more of these dicarboxylic acids may, of course, be used in the preparation of suitable polyvinyl esters. Suitable cyclic lactones which may be polymerized via ring opening include, but are not necessarily limited to, pivalolactone, $\beta$-propiolactone, $\epsilon$-caprolactone and the like. Suitable polyhydric alcohols, which are useful in the preparation of a thermoplastic polyalcohol include, but are not limited to, the aliphatic and aromatic glycols such as ethylene glycol, 1,3-propane diol, 1,2-propane diol, 1,4-butane diol, 1,6-hexane diol, 1,4-cyclohexane diol, neopentyl glycol, p-xylene glycol and the like. In general, the thermoplastic polyesters useful in the compositions of this invention may be prepared in the same manner as the thermosetting polyesters described supra. Methods for polymerizing the cyclic lactones are disclosed in e.g. U.S. Patent Nos. 3,259,607; 3,299,171 and 3,579,489.

In general, any elastomer containing conjugated diolefin monomer units wherein polymerization of the conjugated diolefin is accomplished at conditions conducive to 1,2-addition of the conjugated diolefin monomer into the polymer chain may be used as the elastomeric modifier in the polyester compositions of this invention. As is well known in the prior art, conjugated diolefins may be caused to polymerize predominantly via 1,2-addition if the conjugated diolefin polymerization is accomplished in the presence of a bifunctional Lewis base or a polar compound such as ethers, thioethers, tertiary amines and the like. The formation of conjugated diolefin polymers containing relatively high 1,2-addition conjugated diolefin monomer units is mentioned in e.g. U.S. Patent Nos. 3,451,988 and 3,792,005. As indicated in these patents, high 1,2-addition of the conjugated diolefin monomer is realized when the polymerization is accomplished in the presence of an anionic polymerization initiator and a bifunctional Lewis base or a suitable polar compound.

In general, the conjugated diolefin polymers useful as modifiers in the polyester compositions of this invention will contain one or more conjugated diolefins containing from 4 to 12 carbon atoms such as 1,3-butadiene, isoprene, piperylene, phenylbutadiene, 3,4-dimethyl-1,3-hexadiene, 4,5-diethyl-1,3-octadiene and the like. Preferably, the conjugated diolefin used in the conjugated diolefin polymers useful in the polyester compositions of this invention will contain from 4 to 8 carbon atoms. One or more of the hydrogen atoms in the conjugated diolefin may be substituted with halogen. The conjugated diolefin polymer useful in the polyester compositions of this invention may also contain one or more other monomers. Other monomers which may be used include aryl-substituted olefins such as styrene, various alkyl-substituted styrenes, paramethoxy styrene, vinyl naphthalene, vinyl toluene and the like. Other useful monomers also include heterocylic nitrogen-containing monomers such as pyridine and quinolone derivatives containing at least one vinyl or $\alpha$-methyl vinyl group such as 2-vinyl pyridine, 3-vinyl pyridine, 4-vinyl pyridine and the like. The conjugated diolefin polymers useful in the polyester composition of the present invention may be conjugated diolefin homopolymers, copolymers of two or more conjugated diolefins and/or a copolymer of one or more conjugated diolefins and one or more other monomers.

In general, the elastomeric conjugated diolefin polymers useful in the polyester resin compositions of this invention will be prepared by contacting the monomer or monomers with an organo alkali metal compound in a suitable solvent at a temperature within the range from -150°C to 300°C. When the conjugated diolefin polymer used is a homopolymer or a random or tapered copolymer, the polymerization will also be accomplished in the presence of a bifunctional Lewis base or polar compound such as an ether, a thioether, a tertiary amine and the like so as to maximize the 1,2-addition of the conjugated diolefin monomer. When the conjugated diolefin polymer is a block copolymer, on the other hand, the polar compound may be present only during that portion of the polymerization wherein the conjugated diolefin monomers are polymerized. In either of these cases, a sufficient amount of the polar compound will be used to produce a copolymer wherein at least 70 mol% of the conjugated diolefin monomer enters the polymer chain via 1,2-addition.

In general, any of the organo alkali metal compounds known to be useful as anionic polymerization initiators may be used in the preparation of the conjugated diolefin polymers useful in the polyester compositions of this invention. Particularly effective polymerization initiators, however, are organo lithium compounds having the general formula $RLi_n$ wherein R is an aliphatic, cycloaliphatic or aromatic hydrocarbon radical having from 1 to 20 carbon atoms and n is an integer of 1 to 4. s-Butyllithium is a particularly preferred organolithium compound for use in preparation of the conjugated diolefin polymers useful in the polyester compositions of this invention.

In general, any of the solvents known to be useful in the preparation of conjugated diolefin polymers can be used in the preparation of the conjugated diolefin polymers useful in this invention. Suitable solvents, then include, but are not limited to, hydrocarbons such as paraffins, cycloparaffins, aromatics and alkyl-substituted aromatics containing from 4 to 10 carbon atoms per molecule. Suitable solvents include benzene, toluene, cyclohexane, methylcyclohexane, n-butane, n-hexane, n-hepthane and the like. Mixtures of such solvents may, of course, be used.

In general, block copolymers which are useful as a modifier in the polyester compositions of this invention as a modifier include those which may be represented by the general formulae: $A_x$-$(B$-$A)_y$-$B_z$ ; and $[A_x$-$(B$-$A)_y$-$B_z]_n$-$C$ wherein A is a polymeric block comprising predominantly monoalkenyl aromatic hydrocarbon monomer units; B is a polymeric block comprising predominantly conjugated diolefin monomer units wherein from 70 to 100 mol% of the conjugated diolefin monomer units are incorporated via 1,2-addition; C is a coupling agent nucleus of a star-shaped block copolymer; x and z are, independently, integers equal to 0 or 1; y is a whole number from 1 to 25; and n is a whole number from 3 to 15 and more preferably from 3 to 6, as determined by GPC on a polystyrene scale. As used herein in connection with polymer block composition, the recitation "predominantly" shall mean that the polymeric block contains at least 85 wt%, preferably at least 95 wt%, of the specified monomer. In general, polymers satisfying the first of the foregoing general formula, which represent linear block copolymers, may be prepared in accordance with any one of the methods described in U.S. Patent Nos. 3,231,635; 3,265,765 and 3,322,856, with the exception that it will be necessary to incorporate a bifunctional Lewis base or a polar compound such as an ether, a thioether, a tertiary amine and the like at least during polymerization of the conjugated diolefin block so as to produce a conjugated diolefin block having the requisite 1,2-addition. Star polymers satisfying the second general formula above may be prepared in accordance with any one of the methods described in U.S. Patent Nos. 3,985,830 and 4,156,673, with the exception that it will again be necessary to incorporate a bifunctional Lewis base or a suitable polar compound such as an ether, a thioether, a tertiary amine and the like at least during that portion of the polymerization wherein the conjugated diolefin blocks are prepared so as to produce a polymer having the requisite 1,2-addition. In general, the monoalkenyl aromatic hydrocarbon polymeric blocks will have a weight average molecular weight within the range from 1,000 to 50,000 while the conjugated diolefin polymeric blocks will have a weight average molecular weight within the range from 10,000 to 150,000.

As indicated supra, the polyester resin compositions of this invention are useful in various moulding and extruding applications. As also indicated supra, the moulded and extruded products prepared with both thermosetting and thermoplastic polyester resin compositions will exhibit improved impact resistance or strength and products prepared with thermosetting polyester resin compositions will exhibit improved surface characteristics as a result of reduced shrinkage.

In general, the polyester resin compositions of this invention will comprise from 1 to 95 wt% of a polyester, from 1 to 50 wt% of a conjugated diolefin polymer wherein at least 70 mol% of the conjugated diolefin monomer units are incorporated via 1,2-addition, from 5 to 50 wt% of a a vinyl monomer when the polyester is a thermosetting, unsaturated polyester, and from 0.001 to 1 wt% of a curing agent, particularly when the polyester is a thermosetting, unsaturated polyester. The polyester resin composition may also comprise a filler, a reinforcing agent and a thickener. When a filler is used, the same will, generally, comprise from 5 to 70 wt% of the polyester resin composition. When a reinforcing agent is used, the same will, generally, comprise from 5 to 90 wt% of the composition. When a thickener is used, the same will, generally, comprise from 0.1 to 5 wt% of the polyester resin composition.

In general, and when the polyester is a thermosetting, unsaturated polyester, any of the solvents known to be useful in polyester resin compositions comprising the same may be used as the solvent in the compositions of this invention. As is well known, suitable solvents will, generally, contain a vinyl group which will react with unsaturation contained in the unsaturated polyester. Suitable solvents containing a vinyl group included the monoalkenyl aromatic hydrocarbons and substituted derivatives thereof such as styrene, α-methylstyrene, aminostyrene, methylethylaminostyrene, methoxystyrene, chlorostyrene, dichlorostyrene, dimethylstyrene, trimethylstyrene, t-butylstyrene, sodium styrene sulfonate, p-benzylstyrene, p-phenoxystyrene and the like.

In general, and when the polyester is a thermosetting, unsaturated polyester, any of the curing agents known in the prior art to be useful for curing such compositions may be used in the compositions of this invention. Suitable curing agents for unsaturated polyesters are, generally, conventional free radical polymerization initiators, particularly organic peroxides and hydroperoxides. Suitable curing agents, then, include dibenzoyl peroxide, dicumyl peroxide, methylethyl ketone peroxide, lauroyl peroxide, cyclohexanone peroxide, t-butyl perbenzoate, t-butyl hydroperoxide, t-butyl benzene hydroperoxide, cumene hydroperoxide, t-butyl peroctoate and the like. In addition, various azo compounds such as azobis-(isobutyronitrile) may be used. A particularly preferred curing agent for thermosetting polyesters is t-butyl peroctoate.

In general, any of the fillers known in the prior art to be useful in polyester resin compositions may be used in the polyester resin compositions of this invention. Suitable fillers include calcium carbonate, calcium silicate, silica, calcined clay, chalk, talc, limestone, anhydrous calcium sulfate, berium sulfate, asbestos, powdered glass, quartz, aluminum hydrate, aluminum oxide, antimony oxide and the like.

In general, any of the reinforcing agents known to be useful in polyester resin compositions may be used in the polyester resin compositions of this invention. Suitable reinforcing agents include fibers of glass, metal silicates, asbestos, cellulose, carbon, graphite, polyesters, polyacryls, polyamides, polyolefins and the like. Chopped glass fibers are particularly effective for use as reinforcing agents.

In general, any of the thickening agents known in the prior art to be effective for use in polyester resin compositions may be used in the polyester resin compositions of this invention. Suitable thickeners include oxides and/or hydroxides of metals of Group II of the Periodic Table. Particularly effective thickeners are the oxides and hydroxides of magnesium, calcium, strontium, barium and zinc. The hydroxides of magnesium and/or calcium are preferred.

In addition to the previously named components, the polyester resin compositions of this invention may also comprise pigments, colorants, lubricants, stabilizers, silane coupling agents and the like. In general, these materials may be added at concentrations well known in the prior art to be effective therefore.

The ingredients of the polyester resin compositions of this invention may be combined by a mixing technique which involves moderate to high shear agitation. This is best accomplished by means of a twin rotor mixer designed to give moderate shear to the paste-like ingredients. It is essential to provide some shear as, due to the relatively high viscosity of the blend, proper mixing cannot be obtained simply by stirring or by using a conventional impeller mixer. Care should, however, be taken to avoid mixing techniques which would increase the temperature of the blend by more than about 35°C as the curing agent, particularly in thermosetting polyester resin compositions, would be activated thereby. Sheet moulding compounding line mixing equipment may also be used. This mixing is, generally, accomplished under sufficient shear to achieve good dispersion of the ingredients without heat buildup sufficient to activate the curing agent in a thermosetting, unsaturated polyester resin composition. Generally, shear which gives rise to temperature increases within the range from 2 to 30°C will be preferred. Also, lower shears within this range will, generally, be used with bulk moulding compositions to avoid degradation of any glass that might be contained therein.

The polyester resin compositions of this invention may be cured or set at conditions known to be effective for this purpose in the prior art. Generally, temperatures within the range from 100°C to 200°C with a nominal holding time within the range from 1 to 15 minutes is sufficient to effect curing of a thermosetting polyester resin composition.

In a preferred polyester resin composition, a block copolymer comprising at least two blocks containing monoalkenyl aromatic hydrocarbon monomer units and at least one block comprising conjugated diolefin monomer units will be used as a modifier in a composition containing an unsaturated polyester, obtained by condensing a dicarboxylic acid and/or anhydride with a dihydric alcohol, and a solvent. In the preferred embodiment, from 80 to 90 mole % of the conjugated diolefin will be incorporated into the conjugated diolefin polymer blocks via 1,2-addition. In the preferred embodiment, the monoalkenyl aromatic hydrocarbon polymer blocks will have a weight average molecular weight within the range of 2,000 to 30,000 and the conjugated diolefin polymeric blocks will have a weight average molecular weight within the range from 30,000 to 90,000. In a most preferred composition, the monoalkenyl aromatic hydrocarbon will be styrene and the conjugated diolefin will be either butadiene or isoprene. Also in a most preferred embodiment, the polyester will be an unsaturated polyester and will contain maleic anhydride monomer units and propylene glycol monomer units. In a most preferred embodiment, the composition will also contain a vinyl monomer, even more preferably, styrene and a curing agent.

In a preferred embodiment, the polyester composition will comprise from 40 to 80 wt% polyester and from 5 to 35 wt%, most preferably 10-25 wt%, of the block copolymer modifier. In a preferred embodiment, the composition will also contain from 50 to 80 wt% vinyl monomer and from 0.1 to 0.5 wt% of a curing agent.

The following Examples are presented solely for purposes of illustration and should not be construed as limiting the invention.

Example 1

In this Example, several unsaturated polyester resin compositions were prepared and then observed for a period of six months for destructive phase separation and, if destructive phase separation was detected, the extent of phase separation was determined. The first of the unsaturated polyester resin compositions was prepared with a modifier within the scope of the present invention, the second through seventh polyester resin compositions, on the other hand, were prepared with a block copolymer having a terminal carboxyl salt group on about 7% of the polymer chains in the polymer. About 54% of this polymer was a diblock copolymer while the remainder was di- and tricoupled as a result of coupling when a living diblock copolymer containing a terminal lithium atom was reacted with $CO_2$ to form the lithium salt group $CO_2Li$. The unsaturated polyester resin compositions tested contained only the unsaturated polyester and the block copolymer modifier dissolved in styrene. The blends were prepared by combining a solution of the unsaturated polyester in styrene with a solution of the block copolymer in styrene. In the seven unsaturated polyester blends tested in this Example, a polyester containing fumaric acid monomer units and propylene glycol monomer units was used. A solution of the polyester containing 65.9 wt% polyester in styrene had a viscosity of 1044 cp at 25°C. The first of the unsaturated polyester resin compositions tested, which composition is hereinafter referred to as compostion 1, was prepared with a diblock copolymer containing a single polystyrene block having a weight average molecular weight of 12,000 and a single polybutadiene block having a weight average molecular weight of 64,000. 84 mol% of the butadiene was incorporated into the polybutadiene polymer block via 1,2-addition. The polyester composition contained about 33 wt% polyester, 15 wt% of the high vinyl block copolymer and 52 wt% styrene. The second, third and fourth polyester resins tested in this Example were prepared with a diblock copolymer identical to that used in composition 1 except that only 35 mol% of the butadiene incorporated into the poly butadiene block was incorporated via 1,2-addition and the living polymer was, as indicated supra, reacted with $CO_2$ to incorporate the $CO_2Li$ salt radial on a portion of the polymer chains. These compositions each contained 33 wt% unsaturated polyester, 15 wt% block copolymer and 52 wt% styrene. For convenience, these three compositions are identified hereinafter as compositions 2, 3 and 4. The fifth, sixth and seventh compositions were identical to compositions 2, 3 and 4 except that the concentration of the diblock copolymer modifier was increased such that the compositions contained 33 wt% polyester, 20 wt% block copolymer and 47 wt% styrene. These compositions are identified as compositions 5, 6 and 7 hereinafter. Composition 1 was blended at 500 rpm after the polyester solution and block copolymer solutions were combined. Composition 2 was blended at 500 rpm, composition 3 at 1,000 rpm and composition 4 at 1,500 rpm. Composition 5 was blended at 500 rpm, composition 6 at 1,000 rpm and composition 7 at 1,500 rpm. In each of the seven blends, the blending was continued for three minutes at 25°C. After preparation, each of the seven blends were observed for destructive phase separation after one hour, one day, one week and six months. When destructive phase separation was observed, the amount of separation was determined as a percentage based upon block copolymer initially contained in the polyester blend. The results obtained on each of the seven blends are summarized in the following Table.

Table 1

| Composition No. | Phase Separation After, Wt% | | | |
|---|---|---|---|---|
| | 1 hour | 1 day | 1 week | 6 months |
| 1 | 0 | 0 | 1 | 1 |
| 2 | 31 | 103 | 106 | 116 |
| 3 | 47 | 106 | 109 | 116 |
| 4 | 63 | 113 | 113 | 116 |
| 5 | 0 | 0. | 0 | 0 |
| 6 | 0 | 0 | 0 | 0 |
| 7 | 0 | 0 | 0 | 0 |

As will be apparent from the data summarized in the preceding table, composition 1, which composition was prepared with 15 wt% of a high vinyl content polymer within the scope of the present invention, was significantly more stable than those prepared with 15 wt% low vinyl content conjugated diolefin polymers. In fact, only 1% of the high vinyl content conjugated diolefin polymer modifier had separated after 6 months while 116% of the modifier had separated from the polyester composition containing the lower 1,2-addition polymer. As will also be apparent from the data summarized in the Table, the composition containing the low 1,2-addition polymer was stable when the low 1,2-addition polymer was present at the higher (20 wt%) concentration.

Example 2

In this Example, two additional unsaturated polyester compositions were tested. All three of the unsaturated polyester resin compositions tested in this Example were prepared with an unsaturated polyester containing fumaric acid and 1,3-dicarboxylic acid-substituted norbornene units in a ratio of about 3.3 to 1 and propylene glycol monomer units. A solution containing 71.4 wt% polyester in styrene had a viscosity of 7,200 cp at 25° C. The first of these compositions, which composition is hereinafter referred to as composition 8, was prepared with a polymeric modifier identical to that used in composition 1 and was prepared in exactly the same manner as was used in preparing composition 1 of example 1. The second of these compositions was prepared with the same polymeric modifier as was used in compositions 2-7. The second of these compositions, which is herein after referred to as composition 9, was prepared in the same manner as compositions 2, 3 and 4. Again, the compositions, after preparation, were observed for destructive phase separation and when phase separation was apparent, the amount of material which had separated was determined as a percentage of the modifier initially added. The results obtained are summarized in the following Table.

Table 2

| Composition No. | Phase Separation After, Wt% | | | |
|---|---|---|---|---|
| | 1 hour | 1 day | 1 week | 6 months |
| 8 | 0 | 0 | 25 | 25 |
| 9 | 34 | 47 | 50 | 100 |

As will be apparent from the data summarized in the preceding Table, the modifier used in composition 8 was not as effective when used with the polyester of this composition as it was with the polyester used in composition 1. Nonetheless, the modifier containing 15 wt% of the relatively high concentration of conjugated diolefin monomer added via 1,2-addition still significantly improved the composition's stability.

Example 3

In this Example, two polyester compositions were prepared and tested. Both of these polyester compositions were prepared with a polyester containing fumaric acid monomer units and propylene glycol monomer units. The first of these compositions, hereinafter identified as composition 10, was prepared with the same modifier as was used in compositions 1 and 8 and the composition was prepared in the same manner as were compositions 1 and 8. The second of these compositions, hereinafter referred to as composition 11, was prepared with a modifier identical to that used in compositions 2-7 and 9 and the composition was prepared in the same manner as were compositions 2, 3 and 4. After the compositions were prepared, each was observed for destructive phase separation and if destructive phase separation was detected the % of the modifier that had separated was determined in the same manner as was used in Examples 1 and 2. The results obtained with these polymers are summarized in the following Table:

8

Table

| Composition No. | Phase Separation After, Wt% | | | |
|---|---|---|---|---|
| | 1 hour | 1 day | 1 week | 6 months |
| 10 | 0 | 0 | 5 | 5 |
| 11 | 56 | 59 | 75 | 100 |

As will be apparent from the data summarized in the preceding Table, the polymeric modifier having a relatively high 1,2-conjugated diolefin monomer addition significantly improves the stability of the polyester composition.

Example 4

In this Example, two unsaturated polyester resin compositions were prepared and observed for destructive phase separation using an unsaturated polyester containing fumaric acid and phthalic acid monomer units in a ratio of about 5 to 1 and propylene glycol monomer units. A solution containing 70.4 wt% of the polyester in styrene had a viscosity of 700 cp at 25°C. The first of these compositions, which is hereinafter identified as composition 12, was prepared with a modifier identical to that used in compositions 1, 8 and 10 and the composition was prepared in exactly the same manner with the same relative concentrations of components. The second of these compositions, which composition is hereinafter identified as composition 13, was prepared with the same modifier polymer as was used in compositions 2-7, 9 and 11 and the composition was prepared in the same manner as were compositions 2, 3 and 4. After preparation, each composition was again observed for destructive phase separation except that the observations were continued for only 1 day. As in Examples 1-3, if destructive phase separation was observed, the extent of separation was determined in the same manner as was used in Examples 1-3. The results obtained with each of these compositions is summarized in the following table:

| Composition No. | Phase Separation After, Wt. % | |
|---|---|---|
| | 1 Hour | 1 Day |
| 12 | 0 | 1 |
| 13 | 100 | 100 |

As will be apparent from the data summarized in the preceding table, the polymeric modifier having a relatively high content of 1,2-added monomer significantly improved the stability of the unsaturated polyester resin composition.

Example 5

In this example, compositions identical to those tested in Example 4, except that an unsaturated polyester prepared with a mixture of fumaric and isophthalic acids and propylene glycol monomer units was substituted for the unsaturated polyester used in the compositions prepared in Example 4. The composition containing a polymeric modifier within the scope of the present invention is hereinafter identified as Composition 14. The composition prepared for purposes of comparison is hereinafter identified as Composition 15. The results obtained with these polyester resin compositions are summarized in the following table:

| Composition No. | Phase Separation After, Wt. % | |
| --- | --- | --- |
| | 1 Hour | 1 Day |
| 14 | 1 | 1 |
| 15 | 10 | 10 |

As will be apparent from the data summarized in the preceding Table, the polymeric modifier having a relatively high content of butadiene incorporated via 1,2-addition again significantly improved the stability of the polyester resin composition.

Example 6

In this example, two compositions identical to those prepared in Example 4, except that a polyester prepared with a mixture of fumaric and isophthalic acids and propylene glycol monomers units, which polyester is available from a different supplier than the polyester used in Example 5, was substituted for the polyester used in Example 4, were prepared and observed in the same manner as was used in Examples 4 and 5 for destructive phase separation. The composition within the scope of this invention was identified as composition 16 while the other is identified as composition 17. The results obtained with these polyester compositions are summarized in the following table:

| Composition No. | Phase Separation After, Wt% | |
| --- | --- | --- |
| | 1 Hour | 1 Day |
| 16 | 0 | 1 |
| 17 | 10 | 10 |

As will be apparent from the data summarized in the preceding Table, the modifier having a relatively high concentration of conjugated diolefin monomer incorporated into the conjugated diolefin polymer blocks significantly improved the stability of the polyester resin composition.

While the present invention has been described and illustrated by reference to particular embodiments thereof, it will be appreciated by those of ordinary skill in the art that the same lends itself to variations not necessarily described or illustrated herein. For this reason, then, reference should be made solely to the appended claims, for purposes of determining the true scope of the present invention.

**Claims**

1. A polyester resin composition comprising at least a polyester and a conjugated diolefin polymer wherein from 70 to 100 mole percent of the conjugated diolefin monomers are incorporated into the polymer via 1,2-addition, the conjugated diolefin polymer being substantially free of carboxyl groups.

2. The polyester resin composition of claim 1 wherein said polyester is a thermosetting, unsaturated polyester.

3. A polyester resin composition of claim 1, comprising a solvent.

4. The polyester resin composition of claim 1 wherein said conjugated diolefin polymer is a copolymer.

5. The polyester resin composition of claim 4, wherein said copolymer contains at least 35 wt% conjugated diolefin monomer units.

6. The polyester composition of claim 4 wherein said copolymer is a block copolymer.

7. The polyester resin composition of claim 6 wherein said block copolymer comprises at least one polymeric block containing predominantly monoalkenyl aromatic hydrocarbon monomer units and at least one block containing predominantly conjugated diolefin monomer units.

8. The polyester resin composition of claim 4 wherein said monoalkenyl aromatic hydrocarbon monomer is styrene and said conjugated diolefin monomer is butadiene.

9. The polyester resin composition of claim 7 wherein said monoalkenyl aromatic hydrocarbon monomer is styrene and said conjugated diolefin monomer is isoprene.

10. The polyester resin composition of claim 1 wherein said polyester is a vinyl ester.

11. The polyester composition of claim 1 wherein from 80 to 90 mole percent of the conjugated diolefin monomer in said conjugated diolefin polymer is incorporated via 1,2-addition.

12. The polyester composition of claim 2 wherein said solvent is styrene.